(19) **Europäisches Patentamt**

**European Patent Office**

**Office européen des brevets**

(11) **EP 1 061 629 B1**

(12) **EUROPEAN PATENT SPECIFICATION**

(45) Date of publication and mention
of the grant of the patent:
**25.08.2004 Bulletin 2004/35**

(51) Int Cl.⁷: **H02J 1/10**

(21) Application number: **99830354.9**

(22) Date of filing: **07.06.1999**

(54) **Single wire current sharing control technique for parallel/redundant operation of a plurality of PWM converters**

Einzeldraht-Stromverteilungssteuerungsverfahren für Parallel-/Redundant Betrieb einer Mehrzahl von Impulsbreitenmodulationskonvertern

Technique de contrôle de répartition du courant dans un fil unique pour l'opération en parallèle/redondant d'une pluralité de convertisseurs à modulation de largeur d'impulsions

(84) Designated Contracting States:
**DE FR GB IT**

(43) Date of publication of application:
**20.12.2000 Bulletin 2000/51**

(73) Proprietor: **STMicroelectronics S.r.l.**
**20041 Agrate Brianza (Milano) (IT)**

(72) Inventors:
• **Passoni, Marco**
**27010 Copiano (IT)**
• **Nora, Paolo**
**27011 Belgioioso (IT)**
• **Dallago, Enrico**
**27100 Pavia (IT)**
• **Sassone, Gabriele**
**15033 Casale Monferrato (IT)**

(74) Representative: **Pellegri, Alberto et al**
**c/o Società Italiana Brevetti S.p.A.**
**Piazza Repubblica, 5**
**21100 Varese (IT)**

(56) References cited:
**EP-A- 0 388 802          US-A- 4 194 147**
**US-A- 4 734 844**

## Description

The current sharing technique is used substantially to upgrade the current delivering capability of a power supply system by addition of converter modules, in order to avoid a redesigning of the power supply.

The modules are paralleled so that the total current delivering capability is nominally the sum of the current capabilities of all the modules.

Parallel operation of converter modules requires a special control because even small differences from the nominal output voltage value can cause considerable unbalancings among modules, because their output impedance is intrinsically very small.

When reliability of the supply system is critically important, the special current sharing control is of great help because by having more modules than those strictly necessary operating in parallel, each module supplies less current than that nominally deliverable, thus reducing electrical and thermal stress.

Moreover, if each module is properly designed an advantageous redundancy can be introduced in a modular power supply system having such a current sharing control. Single failure tolerance can be easily achieved by adding one or more "reserve" modules.

For these reasons, the current sharing technique is more and more used in computer power supply systems, especially for high reliability and "high end" productions.

Desktop and server processors require a stringent regulation of the supply voltage while absorbing currents often exceeding 10-15 A, with extremely fast current "slew rate".

In those conditions a DC-DC switching converter is commonly required (often referred to as VRM Voltage Regulator Module) for regulating the supply voltage of the "core" of the processor.

In those conditions a DC-DC switching converter is commonly required (often referred to as VRM Voltage Regulator Module) for regulating the supply voltage of the "core" of the processor.

If more processors are present in the same system, as in server applic tions, it is necessary to have a power supply system of very high reliability capable of ensuring an augmented current delivering capability in case of need.

Often, economy and convenience reasons impose to implement the particular current sharing control by a single control wire, i.e. by a single control pin of each module.

A single wire current sharing control can be realized by means of an additional integrated controller, dedicated to load sharing functions, in respect to a normal DC-DC converter system. Commercially available examples are the devices UC3907 and UC3902 by Unitrode.

This known approach implies resorting to rather complex techniques to secure stability to the current sharing control loop, as described in the application notes of commercial devices. Moreover, it is necessary to duplicate the integration of high performance analog circuitry, such as voltage references and error amplifiers in the main IC containing the power supply controller as well as in the load sharing function controller IC. This solution is costly in terms of complexity and of integration area requisites.

The so-called "droop" techniques for implementing a current sharing control are based on a finite value of the converter output resistance. Therefore it is necessary to sense the output current and the output resistance to secure a sufficiently precise control of current sharing. This can cause a degradation of the output voltage regulation.

If the output current sensing resistance is relatively large, efficiency losses may become remarkable. In these cases, an additional amplifying circuitry of the current sense signal may be necessary.

Although the current sharing technique is relatively easy to implement in current mode controlled supplies, distinct current delivering modules should be "synchronized" among them.

This need reintroduce the necessity of using other dedicated pins.

The output of the voltage error amplifier of the principal module or master module (converter) is in fact coupled also with the slaves PWM comparators.

Since the output of the voltage error amplifier determines the peak value of the current peak value in the inductor, the current of each module will follow the only driving signal coming from the master module. In that way, current sharing can be implemented with a high degree of precision.

Unfortunately, according to this approach it is necessary to sense the current flowing in the inductor.

In VRM applications, the use of a current sensing resistance is not seen with favour because of the very high current levels associated to a relatively small output voltage. Any additional voltage drop in series to the output would negatively affect efficiency.

Alternative sensing methods of the current flowing through the inductor can be employed but such methods require an additional circuitry.

US-A-4,194,147 discloses a switching regulator system and method including a plurality of switching regulators connected in parallel and the control circuitry to accomplish a uniform loading of the switching regulators in function of their rated current producing capacity.

The control circuitry produces a control signal that is fed to each switching regulator and each switching regulator includes a buffer circuit responsive to the control signal that is coupled to the base electrode of the respective switching transistor for turning all of the switching transistors on and off substantially simultaneously in response to the control signal.

EP-A-0 388 802 discloses an error amplifier for using linear or switched-mode voltage or current regulators based on a transconductance type power-amplifier for enabling easy modular parallel connection of said regulators.

The commercial device Si9143 by Temic Semiconductors, illustrated and described in the corresponding describing note named "Current sharing controller for high performance processors" (Rev.B. 03-NOV-97), uses a current sharing technique in which the necessary control is implemented with two wires (two dedicated pins).

The current sharing is obtained by forcing every module to operate at the same duty-cycle.

This is achieved by connecting in common the PWM pins and the SYNCH pins of all the controllers.

The SYNCH pins force each controller to start his own duty cycle at the same instant, while the PWN pins set the instant of the duty cycle of all controllers (modules).

The current sharing mechanism is based upon matching the resistances of the converter operating in parallel mode.

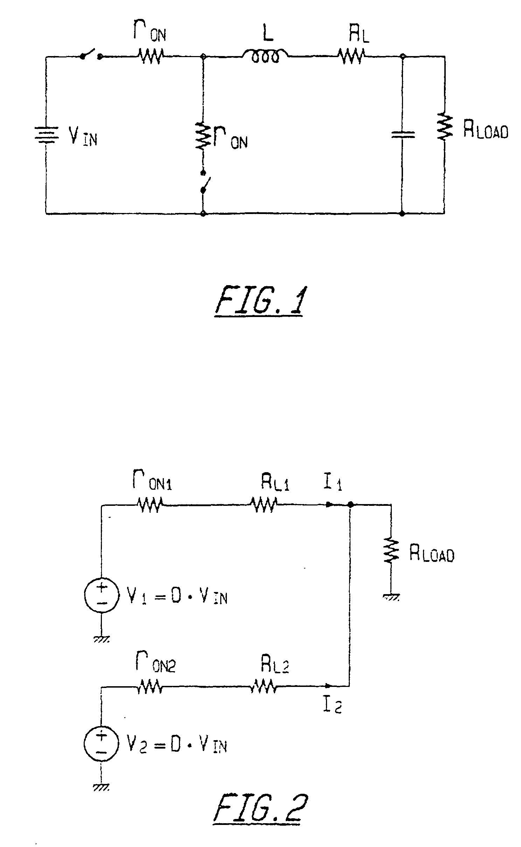

Considering the scheme in fig.1, exemplifying a so-called "buck" type, synchronous power stage, in which the parasitic resistances of the power switch and of the output inductor are evidenced, the average of the large DC signal of two paralleled converters may be represented by the equivalent scheme of figure 2.

Given that the input voltage Vin and the duty cycle D are the same for both converters, the voltage sources V1 and V2 have the same value, i.e. D*Vin. Thus, the total load current will flow in each branch depending upon their respective series resistances.

The technique realized in the device Si9143 is relatively easy and low-cost but it does not satisfy the requisite of realizing a single wire current sharing control, i.e. of engaging only one pin of a converter module.

PURPOSE AND SUMMARY OF THE INVENTION

The present invention aims to provide for an alternative current sharing control technique implementable through a single wire, that is by dedicating to such control only one pin of the DC-DC converter modules operating in PWM mode.

Indeed, it has been observed that, in absence of load transients, only one of DC-DC converters functioning in parallel with the same duty cycle has his voltage loop active in regulating the output voltage, while the other converters have their voltage regulation loop saturated. This happens because of unavoidable differences among voltage references and offsets of error amplifier of the controllers of the distinct DC-DC converters and because at low frequency the gain of the voltage regulation loop of the converters is extremely high by virtue of the presence of an integrating stage in the loop.

Surprisingly it has been found that practically it is useless to synchronize the clocks of the controller different DC-DC converter modules having the error amplifier saturated, because unavoidably the duty cycle generated by their PWM modulator would be maximum anyhow and so useless for static regulation.

What is strictly necessary to the parallel operation of converter modules is that the PWM signal come from the only converter that has his own voltage control loop in regulation.

According to the invention, the controller of the DC-DC converter that has the voltage control loop in regulation and that has been forcing the highest duty cycle for a sufficiently long time, is allowed to assume the role of master converter and thus to furnish his own PWM signal to all the other converters.

Since according to the invention it is assumed that at least one of the converters has his own voltage loop in regulation, the so-called "soft start" function must act in a different manner than the usual which results in a gradual increase of the duty cycle in an open loop condition.

Most preferably, the "soft start" function acts by limiting the voltage reference value (at the noninverting input of the error amplifier) instead of by forcing directly the error amplifier output, as usually done in DC-DC converter.

BRIEF DESCRIPTION OF THE DRAWINGS

  **Figure 1** is a scheme of a synchronous "buck" power stage, in which the parasitic resistances of switches and inductors are highlighted.

  **Figure 2** is an equivalent scheme defining the average of the large DC signal of two converters functioning in parallel.

  **Figure 3** is a circuit diagram of an embodiment of the invention, representing two distinct DC-DC converter modules connected such to operate in parallel with each other.

DESCRIPTION OF AN EMBODIMENT OF THE INVENTION

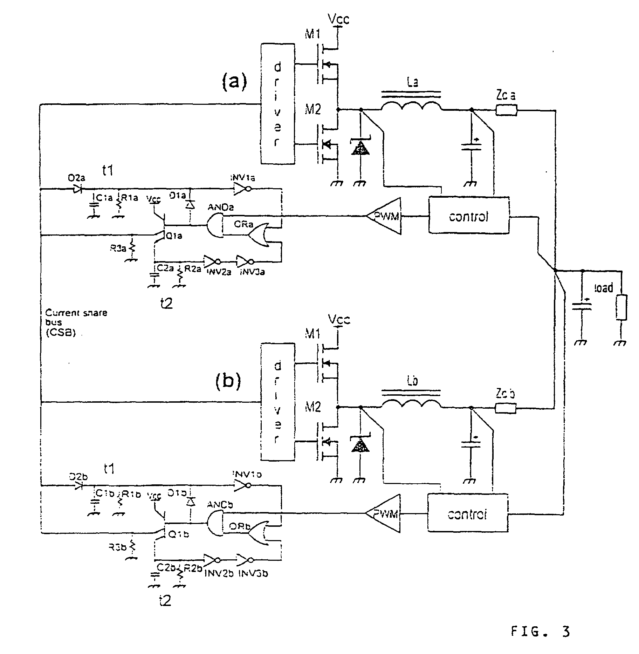

For example, in figure 3 is shown the circuit diagram of a modular supply system, in which two distinct DC-DC converter modules are represented, connected so as to function in parallel, by controlling the current sharing through of a single wire, CURRENT SHARE BUS, or briefly CSB.

In the example, the two converter modules indicated as a whole by (a) and (b), respectively, are of the "buck" type and substantially identical.

Essentially, on the single wire control bus, CSB, of current sharing, is forced a PWM signal; the PWM signal being a hard-wired OR signal of the output signals of the PWM modulators of the controllers of the two converter modules (a) and (b).

The interface stage of each converter may be realized, as in the example depicted in figure 3, with the components: AND, OR, INV1, INV2, INV3, R1, R2, R3, C1, C2, D1, D2, Q1. In the figure, a suffix "a" or "b", depending upon which converter they belong to, is added to the identifiers of component of the two identical interface stages.

The interface logic circuit can be implemented in different forms, provided that it performs the following functions:

1. confirming at every low-to-high switching of PWM modulator, enablement to drive the single wire control bus CSB of the current sharing, for the converter which at that moment is effectively imposing the duty cycle, in other words acting as master converter;

2. disabling the driving of the CSB control bus by any other converter being functioning as "slave";

3. preventing that even in presence of a load transient the converters operating as slave unduly interfere with the driving of the CSB control bus;

4. enabling any converter, that is the PWM modulator of any converter, to drive the CSB control bus, in case the bus remains at low logic level for a time interval greater than a certain limit, such a condition being interpreted as a possible failure of the converter thus has been operating as master converter.

In performing this last function, it is supposed that in case of a converter failure, the respective control circuit CONTROL is disconnected from the power supply.

First of all let's consider the steady-state condition, without load transients.

In line with what has been explained above, only one control circuit remains active, for sake of illustration, the controller "a", which controls the drivers of the various paralleled supplies by the bus CURRENT SHARE BUS (CSB). It is assumed that to the high logic state (H) of CSB corresponds an off condition of the MOSFET M1.

It is readily noted that at each L-to-H transition of the output of the gate ANDa, enablement to drive the CSB bus is confirmed by the monostable composed of C2a, R2a, INV2a and INV3a, (which may be indicated as the monostable 2 of the controller "a") and the gate OR_a. The duration of the interval set by the monostable 2 is indicated by t2.

The part of the circuit that includes D2, C1, R1 and INV1 implements another monostable circuit, which may be indicated as monostable 1, setting the interval t1. Monostable 1 receives an input the CSB signal and outputs a low logical level (L) until the CSB carries the normal driving signal, i.e. at the switching frequency and with a certain duty cycle.

Therefore, one of the inputs of the OR gates remains at the level L until the CSB is switching.

If, in a start-up phase, the PWM modulator of controller "b" has commanded a zero duty cycle signal for a longer time than the interval set by monostable 2, while the CSB was switching because of the driving of "a", both inputs of the gate OR_b are L and the output of modulator PWM is masked. The ANDb output remains at level L, and the function of hard-wired OR on CSB corresponds to the PWM signal coming from controller "a".

It will be shown in the following how this may happen.

The only way to put back into play the "slave" controllers, that have been disabled to drive the CSB, is that the bus remains in a logic low state for a longer time than the duration of the interval set by the monostable 1. In fact, if the CSB remains longer than normal at level L, the monostable output switches to level H after a delay time proportional to the time constant R1C1 from the last transition from level H to level L of the CSB.

The time constant R1C1 must be chosen such that the disabled controllers will not be enabled by a foreseeable transition from a high load current to a low load current, during which the CSB may remain at level L for times longer than the switching period.

A similar function is performed by the monostable 2 made of C2, R2, Q1, INV2 and INV3, which receive, at an input the output of the AND gate and outputs a level H while its input is switching.

If its input remains at level L, the output of the monostabie switches to level L after a delay time proportional to the time constant R2C2 from the last input transition from level H to level L. The outputs of the monostable circuits are summed by the OR gate obtaining logical signal denoted with E (Enable). When E is high, the AND gate transfers the output of the modulator to the base of Q1, which together with the pull-down resistance R3 realize an hard-wired OR function. Therefore, if the different signals E are high, the logical sum of the drive signals of the modulators is present on the CSB bus.

In order to study the reaching of a steady-state by the circuit, it is assumed that the start-up uses a soft start function acting on the voltage reference, by increasing it gradually from zero to the nominal value. Initially the CSB does not switches, so all the enabling signals E are high and the logical sum of the modulators output is present on the CSB. These signals are asynchronous among each other, not being present any synchronizing clock signal. Therefore on the CSB is present a logical signal of variable frequency, characterized by a duty cycle greater than the duty cycle set up by each module. For this reason the output voltage exceeds the reference voltage, which is slowly increasing, causing a negative saturation of the control loop.

In particular between the two controllers the first reaching the saturation is that which, because of existing offsets, would impose the lowest output voltage. At this point, on the CSB is present only the output of the modulator whose regulator is still functioning in a closed loop mode.

If there are not rapid variations of the output voltage, caused by load transients, during the soft start phase, the saturated regulator remains in such a state and this fact, after a certain time, causes the switching of the monostable circuit 2 of the regulator, from the H level to the L level. Because the CSB is switching, the output of the monostable circuit 1 of the saturated module is low and so the signal E of the same module assumes the L logical state, thus isolating the output of the modulator from the CSB bus.

In these conditions, only a regulator is active in driving both modules. The saturated regulator, upon a load transient, could exit from its state of negative saturation because of the drop of the output voltage of the power supply system. Nevertheless, because the Enable signal E is low, the output of the "a" modulator is not transferred on the CSB, therefore, even during a load transient, the active regulator is only one. In the event of a failure of the module whose regulator is active, it is supposed that the CSB bus is permanently set at level L.

If this occurs, after a certain time the monostable circuit 1 of the remaining module will restore again the Enable signal E and the controller will drive the intact VRM. The monostable circuit I must intervene after a period of time longer than the persistence of a negative saturation state of the regulator at load turn-off, which may be estimated, in first approximation, as the discharge time of the inductance L at a constant voltage, equal to the output voltage Vload, starting from the load current $\frac{Iload * L}{Vload}$.

**Claims**

1. A modular power supply system comprising a plurality of DC-DC converters functioning in DC-DC converter mode and connected in parallel, each pulse width modulation (PWM) having a PWM modulator, and means for controlling a current sharing among said converters that include a single wire current sharing control bus (CSB), to which are coupled in parallel the drive inputs of all said converters and on which a logic OR signal derived from the signals output by said PWM modulators of the converters is forced, and **characterized by** the presence of a logic interface circuit between the output of each PWM modulator and said single wire bus (CSB) for controlling the current sharing, each of said interface circuits comprising

   a first monostable circuit (D2, C1, R1, INV1) defining a first time interval (t1) having an input coupled to said current sharing control bus (CSB);

   a second monostable circuit (C2, R2, INV2, INV3) defining a second time interval (t2), having an input coupled to a bus driver stage (Q1) of said control bus (CSB);

   the outputs of said first monostable circuit and of said second monostable circuit (C2, R2, INV2, INV3) being coupled to corresponding inputs of an OR logic gate whose output is coupled to a first input of an AND logic gate, a second input of which is coupled to the output of the PWM modulator of the converter;

   said driver stage (Q1) of the control bus (CSB) having an input coupled to the output of said AND logic gate.

2. A method for controlling a modular power supply system comprising a plurality of DC-DC converters connected in parallel and functioning in a PWM mode, each DC-DC converter comprising a PWM modulator, and including a single wire current sharing control bus (CSB) to which an input of a driving circuit (DRIVER) of each DC-DC converter is coupled and to which the output of the PWM modulator of each DC-DC converter is coupled through a logic interfacing circuit including a bus driver stage (Q1), to said single wire bus (CSB), the method being **characterized by** the following steps:

   generating in said interfacing circuit (D2, C1, R1, INV1) a pulse lasting a certain time interval (t1) when a PWM driving signal ceases to be present on said single wire bus (CSB);
   generating in said interfacing circuit (C2, R2, INV2, INV3) a pulse lasting as long as said bus driver stage (Q1) is switching;
   ORing said generated pulses to produce an ORed signal and ANDing said ORed signal with the output of the PWM modulator for controlling the bus driver stage (Q1), implementing the following functions:

      confirming at each low-to-high switching of the PWM modulator of the converter that is currently imposing a certain duty cycle to all other converters, enablement to drive the single wire current sharing control bus (CSB) and confirming disablement of any other converter being functioning as a slave converter from driving the single wire current sharing control bus (CSB), preventing that even in presence of a load transient any converter functioning as slave interfere with the driving of said bus;

      enabling the PWM modulator of any converter to drive said current sharing control bus (CSB) whenever the bus remains at a logic low level longer than said first time interval (t1).

## Patentansprüche

1. Modulares Stromversorgungssystem, das mehrere Gleichspannungswandler, die in einer Pulsweitenmodulations- (PWM)- Betriebsart arbeiten und parallel geschaltet sind, wobei jeder Gleichspannungswandler einen PWM-Modulator aufweist, und eine Einrichtung zur Steuerung einer Stromverteilung unter den Wandlern aufweist, die einen Einzeldraht-Stromverteilungssteuerbus (CSB) aufweist, an den parallel die Treibereingänge aller Wandler gekoppelt sind und auf dem ein logisches ODER-Signal erzwungen wird, das aus den Signalen abgeleitet wird, die aus den PWM-Modulatoren der Wandler ausgegeben werden, und das durch das Vorhandensein einer logischen Schnittstellenschaltung zwischen dem Ausgang jedes PWM-Modulators und dem Einzeldrahtbus (CSB) zur Steuerung der Stromverteilung **gekennzeichnet ist**, wobei jede der Schnittstellenschaltungen aufweist:

   eine erste monostabile Schaltung (D2, C1, R1, INV1), die ein erstes Zeitintervall (t1) definiert, von der ein Eingang mit dem Stromverteilungssteuerbus (CSB) gekoppelt ist;
   eine zweite monostabile Schaltung (C2, R2, INV2, INV3), die ein zweites Zeitintervall (t2) definiert, von der ein Eingang mit einer Bus-Treiberstufe (Q1) des Steuerbusses (CSB) gekoppelt ist;

   wobei die Ausgänge der ersten monostabilen Schaltung und der zweiten monostabilen Schaltung (C2, R2, INV2, INV3) mit entsprechenden Eingängen eines logischen ODER-Glieds gekoppelt sind, dessen Ausgang mit einem ersten Eingang eines logischen UND-Glieds gekoppelt ist, von dem ein zweiter Eingang mit dem Ausgang des PWM-Modulator des Wandlers gekoppelt ist;
   wobei ein Eingang der Treiberstufe (Q1) des Steuerbusses (CSB) an den Ausgang des logischen UND-Glieds gekoppelt ist.

2. Verfahren zur Steuerung eines modularen Stromversorgungssystems, das mehrere Gleichspannungswandler, die parallel geschaltet sind und in einer PWM-Betriebsart arbeiten, wobei jeder Gleichspannungswandler einen PWM-Modulator aufweist, und einen Einzeldraht-Stromverteilungssteuerbus (CSB) aufweist, an dem ein Eingang einer Treiberschaltung (DRIVER) jedes Gleichspannungswandlers gekoppelt ist und an dem ein Ausgang des PWM-Modulators jedes Gleichspannungswandlers durch eine logische Schnittstellenschaltung gekoppelt ist, die eine Bus-Treiberstufe (Q1) zum Einzeldrahtbus (CSB) aufweist, wobei das Verfahren durch die folgenden Schritte **gekennzeichnet ist:**

   Erzeugen in der Schnittstellenschaltung (D2, C1, R1, INV1) eines Impulses, der ein bestimmtes Zeitintervall (t1) dauert, wenn ein PWM-Treibersignal aufhört, auf dem Einzeldrahtbus (CSB) vorhanden zu sein;
   Erzeugen in der Schnittstellenschaltung (C2, R2, INV2, INV3) eines Impulses, der so lange dauert, wie die Bus-Treiberstufe (Q1) schaltet; ODER-Verknüpfen der erzeugten Impulse, um ein ODERverknüpftes Signal zu erzeugen, und UND-Verknüpfen des ODER-verknüpften Signals mit dem Ausgang des PWM-Modulators zur Steuerung der Bus-Treiberstufe (Q1),

wobei die folgenden Funktionen implementiert werden:

   Bestätigen bei jedem Umschalten von einem niedrigen Pegel auf einem hohen Pegel des PWM-Modulators des Wandlers, der gegenwärtig allen anderen Wandlern ein bestimmtes Tastverhältnis auferlegt, Freigabe, den Einzeldraht-Stromverteilungssteuerbus (CSB) zu treiben und Bestätigen der Sperrung jedes anderen Wandlers, der als ein Neben-Wandler arbeitet, den Einzeldraht-Stromverteilungssteuerbus (CSB) zu treiben, Verhindern, daß selbst beim Vorhandensein eines Laststoßes irgendein Wandler, der als Neben-Wandler arbeitet, das Treiben des Busses stört;
   Freigeben des PWM-Modulators jedes Wandlers, den Stromverteilungssteuerbus (CSB) zu treiben, jedesmal, wenn der Bus länger als das erste Zeitintervall (t1) auf einem logischen niedrigen Pegel bleibt.

## Revendications

1. Système d'alimentation modulaire comprenant une pluralité de convertisseurs continu-continu fonctionnant en mode de modulation de largeur d'impulsion (PWM) et connectés en parallèle, chaque convertisseur continu-continu comprenant un modulateur PWM et des moyens pour commander le partage du courant entre les convertisseurs qui comprennent un bus de commande de partage de courant (CSB) à fil unique auquel sont couplées en parallèle les entrées de commande de tous les convertisseurs et sur lequel un signal logique OU obtenu à partir des signaux fournis par les modulateurs PWM des convertisseurs est forcé, et **caractérisé par** la présence d'un circuit logique d'interface entre la sortie de chaque modulateur PWM et le bus à fil unique (CSB) pour commander le partage du courant, chacun des circuits d'interface comprenant :

un premier circuit monostable (D2, C1, R1, INV1) définissant un premier intervalle de temps (t1) ayant une entrée couplée au bus de commande de partage de courant (CSB) ;

un second circuit monostable (C2, R2, INV2, INV3) définissant un second intervalle de temps (t2), ayant une entrée couplée à l'étage de commande de bus (Q1) du bus de commande (CSB) ;

les sorties du premier circuit monostable et du second circuit monostable (C2, R2, INV2, INV3) étant couplées aux entrées correspondantes d'une porte logique OU dont la sortie est couplée à une première entrée d'une porte logique ET dont une seconde entrée est couplée à la sortie du modulateur PWM du convertisseur ;

l'étage de commande (Q1) du bus de commande (CSB) ayant une entrée couplée à la sortie de la porte logique ET.

2. Procédé de commande d'un système d'alimentation modulaire comprenant une pluralité de convertisseurs continu-continu connectés en parallèle et fonctionnant dans un mode PWM, chaque convertisseur continu-continu comprenant un modulateur PWM et comprenant un bus de commande de partage de courant (CSB) à fil unique auquel une entrée d'un circuit de commande (DRIVER) de chaque convertisseur continu-continu est couplée et auquel la sortie du modulateur PWM de chaque convertisseur continu-continu est couplée par un circuit d'interface logique incluant un étage de commande de bus (Q1) vers le bus à fil unique (CSB), le procédé étant **caractérisé par** les étapes suivantes :

produire dans le circuit d'interface (D2, C1, R1, INV1) une impulsion durant un certain intervalle de temps (t1) quand un signal de commande PWM cesse d'être présent sur le bus à fil unique (CSB) ;

produire dans le circuit d'interface (C2, R2, INV2, INV3) une impulsion durant tant que l'étage de pilote de bus (Q1) est en train de commuter ;

effectuer un OU logique des impulsions produites pour produire un signal OU et effectuer un ET logique du signal soumis la fonction OU avec la sortie du modulateur PWM pour commander l'étage de commande de bus (Q1), en mettant en oeuvre les fonctions suivantes :

confirmer à chaque commutation bas-haut du modulateur PWM du convertisseur qui est en train d'imposer un certain rapport cyclique à tous les autres convertisseurs, la capacité de piloter le bus de commande de partage de courant (CSB) à fil unique et confirmer l'invalidation de tout autre convertisseur fonctionnant en tant que convertisseur esclave pour piloter le bus de commande de partage de courant (CSB) à fil unique, empêchant que, même en présence d'un transitoire de charge, un quelconque convertisseur fonctionnant en esclave interfère avec la commande du bus ;

valider le modulateur PWM de tout convertisseur pour piloter le bus de commande de partage de courant (CSB) chaque fois que le bus reste à un niveau logique bas plus longtemps que le premier intervalle de temps (t1).

FIG.1

FIG.2

8

FIG. 3